# EUROPEAN PATENT SPECIFICATION

(11) **EP 0 891 845 B1**
(45) Date of publication and mention of the grant of the patent: **09.07.2003**
(21) Application number: 98830292.3
(22) Date of filing: 15.05.1998
(51) Int. Cl.: B27L 7/00, F16P 3/24

(54) **Wood log or stub splitting apparatus**
Vorrichtung zum Spalten von Holz
Dispositif pour fendre des pièces de bois

(30) Priority: 11.07.1997 IT TO970625
(43) Date of publication of application: 20.01.1999
(73) Proprietor: Ricca Andrea & C. Snc, 12022 Busca (Cuneo) (IT)
(72) Inventor: Ricca, Andrea, 12044 San Biagio di Centallo (Cuneo) (IT)
(74) Representative: Buzzi, Franco

(56) References cited:
- DE-U- 9 115 379

## Description

### Field of the invention

The present invention is related to a wood log or stub splitting apparatus of the type comprising a support structure, a linear actuator carried by the support structure and actuating a splitting blade displaceable between a retracted position and an advanced position relative to a bearing or contrast surface or plate for a wood log to be splitted, an operating assembly of the linear actuator, and control means of the operating assembly to displace the splitting blade from the retracted position to the advanced position and vice-versa.

In the following description and claims reference shall be constantly made to the case of an apparatus wherein the splitting blade is movable with respect to the contrast plate: it is however to be pointed out that the invention can be identically applied even to the case the splitting blade is instead stationary and the contrast plate is movable, by means of said linear actuator, between a retracted position and an advanced position with respect to the splitting blade.

### State of the prior art

In the wood log or stub splitting apparatus of the above-referenced type the problem subsists of ensuring operator's safety, namely in connection with the risk of hand injury during displacement of the splitting blade from the retracted position to the advanced position. In fact the wood logs to be splitted are normally positioned manually against the bearing plate of the apparatus, whereby the fingers or other parts of the operator's body may accidentally be interposed between the wood log and the moving blade. To give a solution to this problem it has been proposed to provide the splitting apparatus with safety means requiring a continuous retention action by both operator's hands to perform the splitting operation of the wood log in turn positioned against the bearing plate of the apparatus. A particular solution of this type, disclosed and illustrated for instance in EP-B-0438997 and EP-B-0519150, consists of employing a pair of swinging arms or handles performing a dual function: locking therebetween the wood log onto the bearing plate in a centered position with respect to the splitting blade, and enabling activation of the operating assembly to carry out the splitting operation solely by means of a manoeuvre operated acting simultaneously and continuously on both swinging arms, and thus employing both hands.

Solutions of this type, while capable to ensure the necessary operating safety, have the drawback to compulsorily keep both operator's hands busy during the whole advancement stroke of the splitting blade, which involves the consequent difficulty to correctly position the logs to be splitted, particularly if these are croked or twisted. It is evident that during the actual splitting phase of the wood log there are no injury risks for the operator, since accidental insertion of the hands beneath the splitting blade is not possible, while from this point of view the critical phase is only that in which the splitting blade progressively approaches the wood log up to full contact therewith. As a consequence the safety system proposed in the above-referenced prior documents actually involves an excessive hindrance for the operator who, instead of being obliged to assist in a passive way the entire splitting operation, could more usefully devote himself over this period of time to sustain the wood logs thus preventing uncontrolled drop of wood pieces upon splitting.

A solution to partially overcome this inconvenience is proposed in DE-A-19640687, according to which the two locking arms for the wood log to be splitted are suppressed, and the safety means comprise two spaced-apart control push buttons operatively connected to the operating assembly of the linear actuator, which is of the fluid pressure type. By continuously actuating only one of the two push buttons, the splitting blade is displaced under a reduced pressure up to bearing thereof against the wood log to be splitted, which is during this phase held by the operator with his other hand. By means of continuous and simultaneous actuation of both push buttons, the splitting blade is then advanced under a higher pressure to perform splitting of the wood log.

It is evident that neither this solution enables overcoming the above drawback, since the splitting phase requires anyway passive assistance by the operator who is thus unable to sustain the wood log during splitting thereof.

From DE-9115379U a wood splitting apparatus according to the precharacterising part of claim 1 is known, wherein the splitting blade is tiltable with respect to the support structure between an angularly lowered position and an angularly raised position upon contacting the log to be splitted so as to stop the relative displacement between the log and the splitting blade operated by the linear actuator. This known solution is affected by several drawbacks.

First of all sensitiveness of the safety function performed by the tiltable blade is largely variable as a function of the distance between the location of contact of the user's fingers against the blade and the tilt axis of the blade. The safety function may even fail if the contact location is close to the axis.

Secondly the transmission which is necessarily provided between the splitting blade and the operating assembly of the linear actuator, and which is comprising traction cable means, may also be subjected to failures with an unacceptable risk to jeopardize the safety function.

Lastly, the safety function is applied by the tilting blade transmission to the operating assembly via the control pedal. If the force applied by the operator's foot onto the control pedal exceeds (for instance in a panic situation) the opposite force applied by the traction cable connected to the tiltable blade, then the safety function may be nullified.

### Summary of the invention

The object of the present invention is to effectively overcome the above mentioned drawback, and more particularly to provide a wood log splitting apparatus of the type set forth at the beginning which, while ensuring the highest safety degree for the operator, enables limiting the need of his manual intervention only to the positioning phase of the log to be splitted onto the contrast surface of the apparatus, even with both hands, until bearing of the splitting blade against the wood log and for starting the actual splitting phase of the wood log, subsequently releasing both operator's hands so as to avoid any further assistance thereby until completion of the splitting stroke of the wood log.

According to the invention, this object is achieved by virtue of the features set forth in the characterising portion of claim 1.

Due to this idea of solution, during the initial phase of the displacement stroke of the splitting blade from the retracted position towards the advanced position the operator can conveniently position and center the wood log to be splitted on the contrast surface of the apparatus, possibly employing both hands in case the control means include a pedal. In this phase, should the cutting blade encounter a even slight resistance to its displacement towards the advanced position, motion thereof is immediately stopped automatically. Stop of the cutting blade occurs anyway upon contacting thereof against the surface of the. wood log to be splitted. Therefore, during this phase there can be no injury risk for the operator, since even the mere contact between one of his hands or any other portion of his body against the splitting blade would produce immediate stop thereof. To then operate starting of the splitting phase the operator must necessarily provide at least one impulse to the safety means, thus employing both hands, and thereafter completion of the blade stroke up to the advanced position may take place without any further action by the operator's hands. Consequently, the operator is free in this phase to carry out other jobs, such as for instance sustaining the wood log so as to prevent accidental drop of pieces thereof upon splitting.

According to the invention said safety means may conveniently comprise an auxiliary device which can be selectively actuated by the operator, following an initial actuation of said safety means making said operating assembly again active, so as to keep said operating assembly permanently active until the splitting blade reaches the advanced position.

In a preferred embodiment of the invention the actuator is a hydraulic jack whose cylinder is connected to the support structure and whose stem carries the splitting blade, and the operating assembly includes a valve unit fixedly secured to the cylinder of the hydraulic jack and comprising a main valve operable by said control means, and a secondary valve operatively associated to the main valve and designed to be actuated through said auxiliary device.

In this case the secondary valve is displaceable, through said auxiliary device, between an inoperative position and an operative piloting position of said main valve.

Said control means may conveniently comprise a pedal, and the safety means include a pair of spaced apart swinging levers or arms, the operative stroke of such swinging arms being greater than the operative stroke of the pedal.

According to a further feature of the invention, elastic suspension means are interposed between the cylinder of the hydraulic jack and the support structure.

### Brief description of the drawings

The invention will now be disclosed in detail with reference to the accompanying drawings, purely provided by way of non limiting example, in which:
- figure 1 is a diagrammatic rear perspective and partially broken view of a wood log splitting apparatus according to the invention,
- figure 2 is a front perspective view of the splitting apparatus,
- figure 3 is a lateral elevational and partially sectioned view along line III-III of figure 1,
- figure 4 is a partial enlarged and partially sectioned view along line IV-IV of figure 3,
- figure 5 is an enlarged view of the detail indicated by arrow V in figure 1 and
- figure 6 is a diagram showing the operating assembly of the splitting apparatus.

### Detailed description of the invention

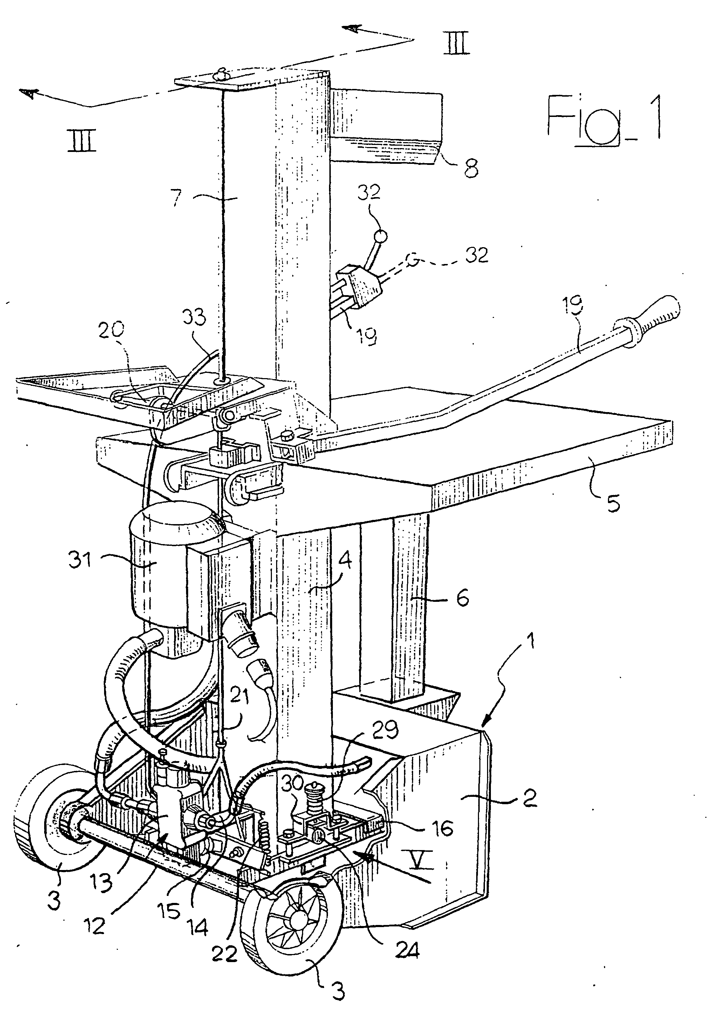

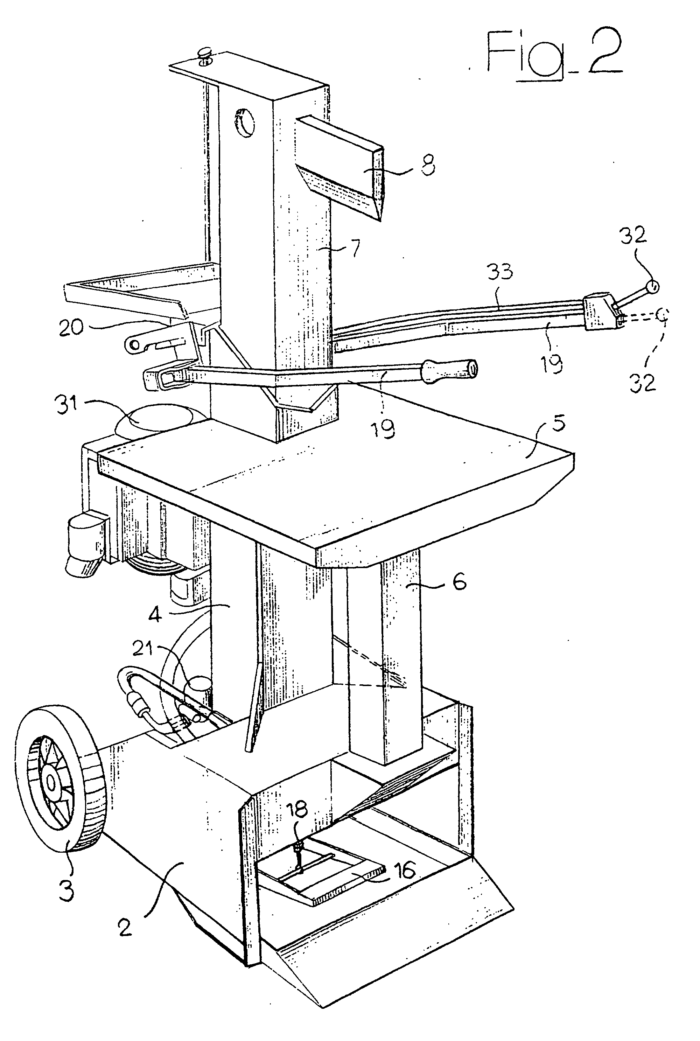

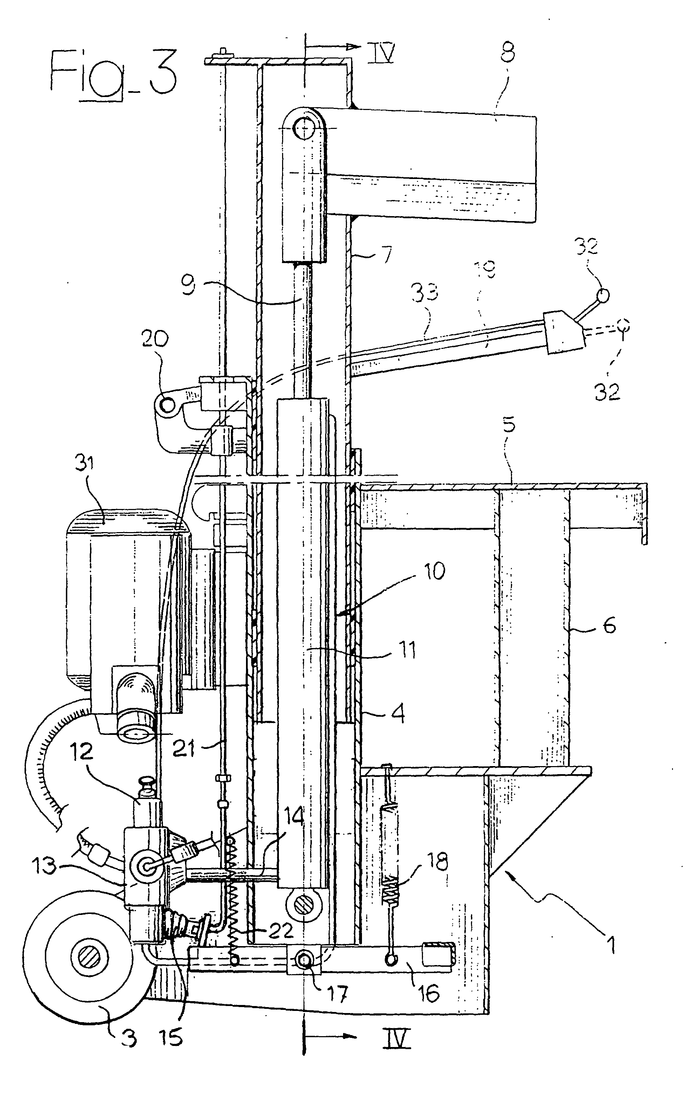

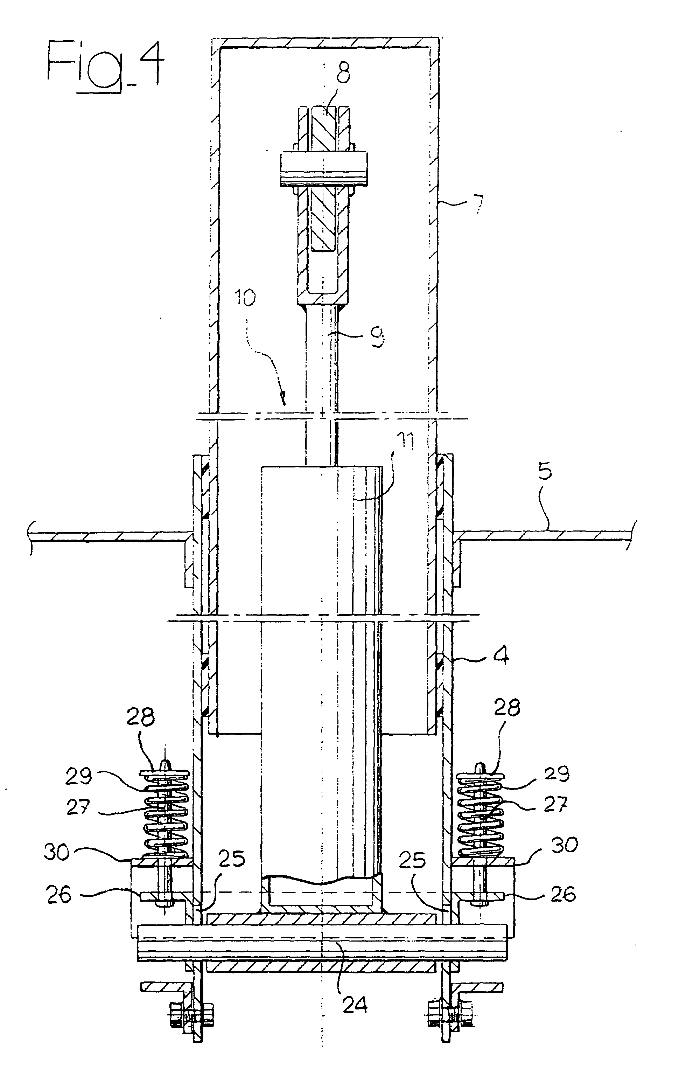

Referring initially to figures 1 through 3, the wood log splitting apparatus according to the invention comprises a support structure generally designated as 1, formed by a base 2 possibly provided with wheels 3, a vertical hollow strut 4 and a horizontal bearing plate or platform 5 carried by a vertical column 6. The hollow strut 4 is open superiorly and houses in a telescopically slidable way a tubular element 7 from which a splitting blade or wedge 8, movable above the bearing platform 5, is projecting outwardly in a cantilever fashion. As it will be further clarified in the following, the splitting blade 8 is displaced vertically with respect to the bearing platform 5 between a retracted or raised position shown in the drawings, and an advanced or lowered position. To perform such displacements, the splitting blade 8 together with the tubular element 7 is carried by the stem 9 of a double-effect hydraulic jack 10 arranged vertically within the strut 4 and whose cylinder 11 is connected to the strut 4, such as clarified in the following, in an axially slidable way along a limited stroke of a predetermined amount.

As already previously clarified the arrangement could be reversed, i.e. the splitting blade 8 could be stationary and the bearing platform 5 would be accordingly displaceable with respect to the blade 8 by means of the jack 10.

Reference numeral 12 indicates a valve unit, whose components shall be disclosed in more detail in the following, having a body 13 rigidly fixed to the base of the cylinder 11 of the hydraulic jack 10 by means of an attachment member 14, and provided with a direct operating member designated as 15.

The direct operating member 15 is operatively connected both to a pedal 16 supported at the bottom of the strut 4 in a swingable way around a horizontal axis 17 and to which a return spring 18 is associated, and to a pair of swinging arms 19. In the case of the shown example the arms 19, mutually spaced apart, are pivoted at opposite sides on top of the hollow strut 4 and are thus arranged above the bearing platform 5. It is however to be pointed out that this arrangement is purely indicative: the arms 19 might be replaced by simple levers or equivalent systems, even positioned beneath the bearing platform 5 or in any other apparatus area.

The two arms 19 of the shown example may possibly be opened and closed relative to each other, and are both connected to a rocker system generally indicated as 20 to operate, through a tie rod 21, the direct operating member 15 of the valve unit 12. This arrangement, which is generally known as being already employed on wood splitting machines according to the prior art mentioned in the above, is such that the operating member 15 is actuated through the tie rod 21 only in case the arms 19 are both simultaneously operated, for instance rotated downwardly, against the action of return springs 22 or other equivalent devices.

It is thus evident that the operating member 15 of the valve unit 12 can be actuated either by the pedal 16, or by the two arms 19. In either case the operating member 15 is angularly shifted upwardly (or to the opposite direction) with respect to the inoperative position shown in the drawings, and in more detail in figures 3 and 5. It is however to be pointed out that the operative stroke of the two arms 19 for actuating the operating member 15 is greater than the corresponding operative stroke of the pedal 16, to which stop members 23, for instance consisting of screws, are to such effect associated.

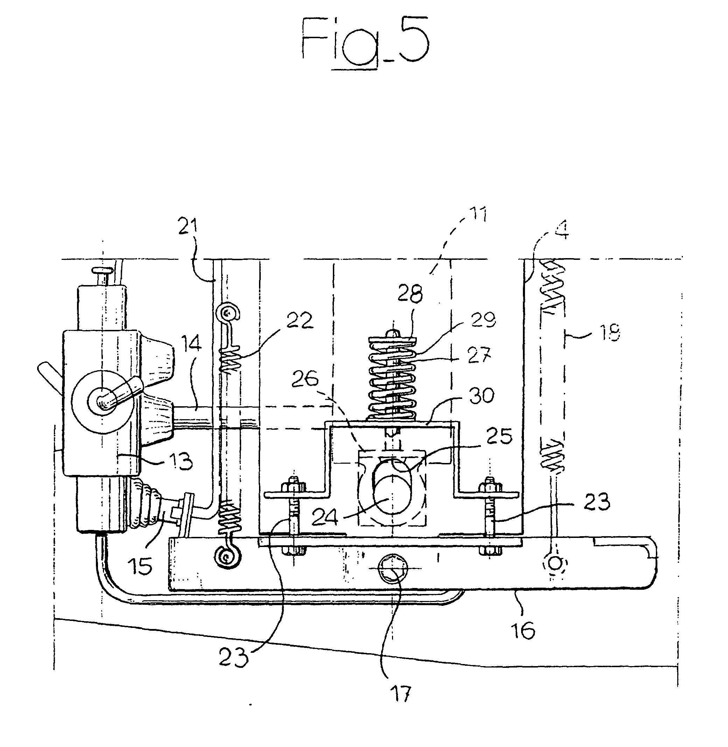

Referring now in better detail to figures 4 and 5, according to the fundamental feature of the invention the hydraulic jack 10 is not stationary, but is axially movable along a stroke of a predetermined amount with respect to the support structure 1 of the wood splitting apparatus. In the case of the shown example the cylinder 11 of the hydraulic jack 10 is fixed inferiorly to a horizontal transverse pin 24 whose ends are fitted in a vertically slidable way through respective lateral slots 25 of the hollow strut 4. Respective brackets 26 are secured onto these ends of the transverse pin 24, to each of which a vertical stem 27 is in turn fixed, carrying superiorly a plate 28. Helical compression springs 29 are interposed between the plates 28 and bearing members 30 secured laterally to the hollow strut 4.

Figures 4 and 5 show the hydraulic jack 10 in its normal lowered position, in which the transverse pin 24 is arranged in correspondence of the lower portions of the vertical slots 25. The arrangement is such that in this position the weight of the hydraulic jack 10 is substantially balanced by the resilient thrust of the two springs 29, properly calibrated to this effect.

As it will become more apparent in the following, whenever during operation the splitting blade 8 encounters a resistance during lowering towards the bearing platform 5 starting from the raised position shown in the drawings, the hydraulic jack 10 vertically moves upwardly until the ends of the transverse pin 24 are positioned in correspondence of the upper portions of the slots 25, whereby the jack 10 remains suspended in a raised condition with respect to the support structure 1, upon the springs 29.
Reference numeral 31 designates a pump or like source of hydraulic fluid under pressure, fixed to the support structure 1 of the splitting apparatus for operation, through the valve unit 12, of the hydraulic jack 10. The source 31 might also be provided at the outside of the splitting apparatus.

Reference numeral 32 designates an auxiliary control member consisting of a swinging lever which, in the case of the shown example, is directly carried by the grasping end of one of the two swinging arms 19. The lever 32 (which might be replaced by any different but functionally equivalent actuating device) is oscillating between the raised position shown with continuous line in the drawings and the lowered position shown by dotted lines, and is connected by means of a transmission, for instance consisting of a flexible cable 33, to the body 13 of the valve unit 12.

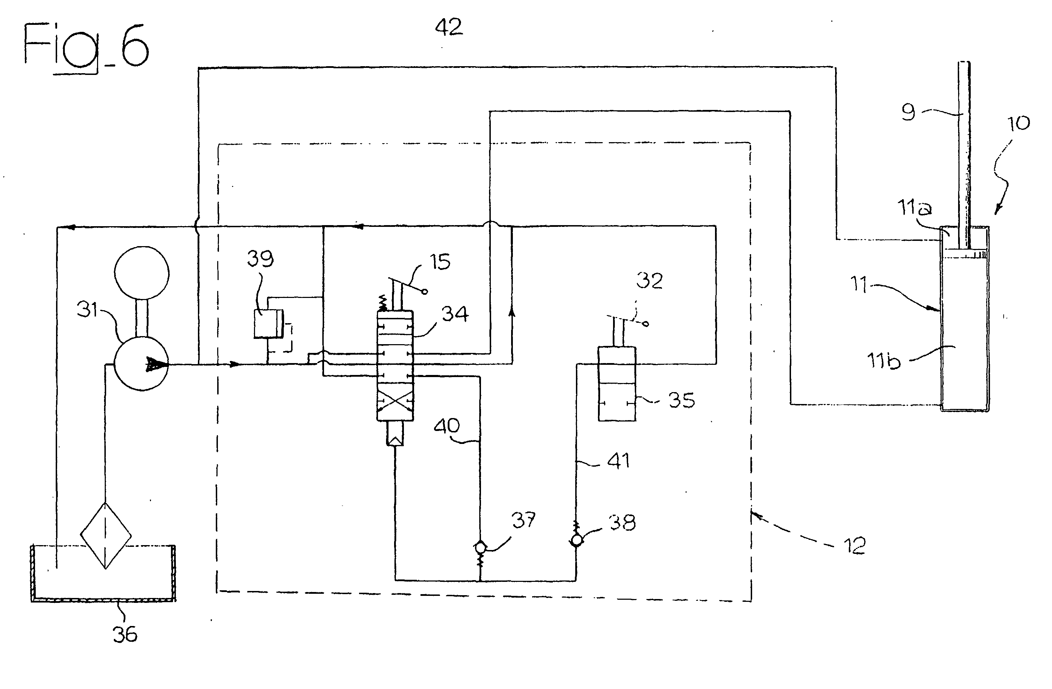

The construction of the valve unit 12 is depicted in the hydraulic circuit diagram of figure 6, and will now be disclosed in detail with reference to this figure.

The valve unit 12 essentially comprises a main valve 34, consisting of a three-position distributor, whose displacement in one direction is operated by the operating member 15 in turn displaceable, as previously explained, by means of the pedal 16 or by means of the two arms 19, against the action of the spring 12 or, respectively, of the springs 22.

The inlet of the main valve 34 is connected with the delivery side of the source 31, which is also directly connected with the upper chamber 11a of the cylinder 11 of the hydraulic jack 10 through an outer regeneration line 42.

Reference numeral 35 designates a secondary valve consisting of a two-position distributor. The secondary valve 35 is actuated by means of the control lever 32 and, in the raised position of such control lever 32 depicted with continuous line in the drawings, the secondary valve 35 is set in the open position shown in figure 6. In this position the secondary valve 35 opens, through a line 41, communication between a hydraulic self-piloting line 40 acting on the side of the main valve 34 opposite to the operating member 15, and a discharge 36. Calibrated check valves 37, 38 are provided in lines 40 and 41, respectively, and a pressure relief valve 39 is associated to the delivery side of the source 31, upstream of the main valve 34.

It is to be pointed out that the diagram of the hydraulic circuit shown in figure 6 has to be considered purely exemplary, since the function performed thereby, which shall be disclosed in the following, may be also carried out by different but functionally equivalent circuit arrangements.

Operation of the splitting apparatus according to the invention is as follows.

It will assumed starting from an initial condition corresponding to the one shown in the drawings, in which the hydraulic jack 10 is extended, and the splitting blade 8 is in the retracted or raised position above the bearing platform 5. Upon start of the apparatus, the valve unit 12 is set such as depicted in figure 6, with the main valve 34 in neutral position with its center connected to discharge, and the secondary valve 35 is in the open position. The operator can load a wood log to be splitted onto the bearing platform 5, positioning and centering it relative to the splitting blade 8.

Then the operator actuates starting of the splitting cycle, normally operating the pedal 16 thus being free to employ both hands to position and center more conveniently the log to be splitted. As a consequence the main valve 34 opens communication between the lower chamber 11b of the cylinder 11 of the hydraulic jack 10, and the discharge 36. Simultaneously the main valve 34 opens communication between the pump 31 and the piloting line 40, which is however initially closed owing to calibration of the check valve 37, and which subsequently is connected to the discharge 36 through the secondary valve 35. The splitting blade 8 is thus moved downwardly until contacting the wood log to be splitted, or until it encounters a resistance to lowering thereof, for instance due to accidental contact of a finger or other parts of the operator's body against the splitting blade 8. In any case the resistance, even of a slightest amount, applied to the splitting blade 8 will produce no injury, since it will cause, by virtue of the elastic suspension performed through the springs 29, displacement of the cylinder 11, i.e. of the jack 10, upwardly to an amount corresponding to displacement of the ends of the pin 24 towards the upper portions of the slots 25. Owing to this displacement the body 13 of the valve unit 12 is correspondingly moved upwardly, thus bringing the operating member 15 back to the starting inoperative position, even if the pedal 16 is still depressed by the operator. As a consequence the primary valve 34 shifts back to its neutral position, thus closing communication between the lower chamber 11b of the cylinder 11 and the discharge 36, thus stopping displacement of the splitting blade 8. As previously explained, this situation occurs every time the splitting blade 8, when approaching towards the bearing platform 5, contacts the top of the wood log resting upon the platform 5 or encounters any possible obstacle.

In this condition, in order to start again displacement downwardly of the splitting blade 8 so as to carry out splitting of the wood log resting on the platform 5, both arms 19 must be operated, i.e. simultaneously rotated downwardly. This necessarily requires action of both operator's hands at least for a quite short period of time, which hands will in this phase be unable to hold the wood log to be splitted. However stability of the wood log onto the bearing platform 5 is warranted in this phase by the contrast force performed from above by the splitting blade 8.

Since as clarified in the above the operative stroke of the two swinging arms 19 is greater than that of the pedal 16, simultaneous lowering of the former performed by both operator's hands is capable to produce again shifting of the operating member 15 of the valve unit 12 and, consequently, re-opening of the primary valve 34. The lower chamber 11b of the cylinder 11 can thus be again placed into communication with the discharge 36, so as to enable the splitting blade 8 to proceed lowering thus carrying out splitting of the wood log. Normally this phase would oblige the operator to employ both hands to hold the arms 19 in the lowered position, and thus to assist in a passive way to the entire wood log splitting operation, since otherwise release of even one of the two arms 19 would involve return of the operating member 15 to its inoperative position and, consequently, stop of the splitting blade 8. On the other hand neither actuation of the pedal 16 could keep the main valve 34 in the open position, since the stroke of such pedal 16 would be unsufficient to maintain the operating member 15 in the operative position, considering that the cylinder 11 of the hydraulic jack 10 and, correspondingly, the valve unit 12 are in this phase held raised, with the ends of the transverse pin 24 located at the upper portions of the slots 25. According to the invention the auxiliary lever 32 enables instead to fully release the operator during the splitting stroke. Actually, if upon initial downward displacement of the arms 19 the auxiliary lever 32 is shifted from the raised position to the lowered position shown with dotted lines in the drawings, closing of the secondary valve 35 is operated through the flexible transmission 33. Accordingly communication between the piloting line 40 and the discharge 36 is interrupted, whereby the main valve 34 is kept in the position set by means of the arms 19, due to the pressure within the piloting line 40. In practice starting and completing of the splitting stroke of the blade 8 thus only requires that the operator performs a manoeuvre corresponding to one single impulse of the two arms 19, together with actuation of the auxiliary lever 32.

If in this phase splitting operation should for any reason need to be interrupted, it shall be sufficient to bring the auxiliary lever 32 back to the raised position, so as to re-open the auxiliary valve 35 thus discharging the pressure within the piloting line 40. If in this event the pedal 16 is kept depressed by the operator, the primary valve 34 is moved to its neutral position, thus stopping downward displacement of the splitting blade 8. If the pedal is instead released, the primary valve 34 is shifted by the action of the springs 22 to the connecting position between the lower chamber 11b of the cylinder 11 and the source 31, thus causing raising again of the splitting blade 8. In other words, the auxiliary lever 32 acts in this way even as an emergency stop.

At the end of the splitting stroke of the blade 8 the auxiliary lever 32 is brought again from the lowered position to the raised position shown with continuous line in the drawings, thus positioning again the secondary valve 35 in the open position and opening, through the main valve 34, communication between the pump 31 and the lower chamber 11b of the cylinder 11, thus bringing the splitting blade 8 again to the raised starting position.

It is to be pointed out that the initial lowering phase of the splitting blade 8 from the raised position up to contact against the log to be splitted can also be operated, instead than through the pedal 16, by simultaneously actuation of the two arms 19, which however involves employing both operator's hands until the splitting blade 8 contacts the wood log to be splitted.

It will be apparent from the above disclosure that the wood log splitting apparatus according to the invention ensures the maximum safety degree against the risk of injuries, however with the advantage of providing during the actual splitting phase an automatic operation cycle, thus making the operator's hands available for instance to hold the wood logs when splitting is in progress, thus avoiding uncontrolled drop of the split pieces.

It is to be pointed out that, while the invention has been disclosed with reference to a splitting apparatus having a vertical hydraulic actuator, it can be conceptually applied even to a splitting apparatus with linear actuator of a different type, for instance also arranged horizontally, as well as to different working machines for example designed to break or cut pieces of material other than wood.

Naturally the details of construction and the embodiments may be widely varied with respect to what has been disclosed and illustrated, without thereby departing from the scope of the present invention, such as defined in the appended claims. Thus, for example, piloting operated on the main valve 34 may be, instead of hydraulic, pneumatic or even electric in case the secondary valve 35 be replaced by a pressure switch or the like.

Moreover the movable connection between the linear actuator 10 and the support structure of the apparatus may be provided, instead than at the bottom of the cylinder 11 as in the case of the shown example, on top of the cylinder itself or even in correspondence of the connection between the stem 9 and the splitting blade 8. Lastly, the valve unit 12 may also be not fixed to the cylinder 11 of the linear actuator 12, and be instead carried by the support structure of the apparatus and be connected to the cylinder through a transmission system operating the actuating member 15 in a way functionally equivalent to what has been previously disclosed by way of example.

## Claims

1. Wood log or stub splitting apparatus, comprising a support structure (1), a linear actuator (10) carried by said support structure (1) and actuating a splitting blade (8) displaceable between a retracted position and an advanced position relative to a contrast surface (5) for a wood log to be splitted, an operating assembly (12) of the linear actuator (10), control means (16,19) of said operating assembly (12) to displace said splitting blade (8) from said retracted position to said advanced position, and vice-versa, said control means (16,19) including safety means (19) requiring the action of both operator's hands to perform splitting operation of a wood log by said splitting blade (8), and a movable member (10) displaceable with respect to said support structure (1) between a first position, in which said operating assembly (12) can be made operative through said control means (16) even independently of actuation of said safety means (19), and a second position corresponding to application onto the splitting blade (8) of a resistance against displacement thereof towards the advanced position, in which said operating assembly (12) is made temporarily inoperative so as to stop displacement of the splitting blade (8) towards said advanced position, and wherein said operating assembly (12) can then be made again operative, so as to pursue displacement of the splitting blade towards said advanced position, upon actuation of said safety means (19), **characterised in that** said movable member consists of said linear actuator (10) which is connected to said support structure (1) in an axially displaceable fashion.

2. Splitting apparatus according to claim 1, **characterised in that** said safety means (19) comprise an auxiliary device (32,35) which can be selectively actuated by the operator, following an initial actuation of said safety means (19) making said operating assembly (12) again active, so as to keep said operating assembly (12) permanently active until said splitting blade (8) reaches said advanced position.

3. Splitting machine according to claim 2, **characterised in that**:
- said linear actuator is a hydraulic jack (10) whose cylinder is connected to the support structure (1) and whose stem (9) carries said splitting blade (8);
- said operating assembly includes a valve unit (12) fixedly secured to the cylinder (11) of said hydraulic jack (10) and comprising a main valve (34) operable by said control means (16,19), and a secondary valve (35) operatively associated to said main valve (34) and designed to be actuated through said auxiliary device (32).

4. Splitting apparatus according to claim 3, **characterised in that** said secondary valve (35) is displaceable, through said auxiliary device (32), between an inoperative position and an operative piloting position of said main valve (34).

5. Splitting apparatus according to claim 3, **characterised in that** said control means comprise a pedal (16), and said safety means include a pair of spaced apart swinging arms (19), the operative stroke of said swinging arms (19) being greater than the operative stroke of said pedal (16).

6. Splitting apparatus according to claim 5, **characterised in that** said auxiliary device comprises a swinging lever (32) carried by the grasping end of one of said swinging arms (19).

7. Splitting apparatus according to claim 3, **characterised in that** said hydraulic jack (10) is arranged vertically and the related cylinder (11) is movable together with said valve unit (12) with respect to the support structure (1) between a lowered position corresponding to said first position, and a raised position corresponding to said second position.

8. Splitting apparatus according to claim 7, **characterised in that** elastic suspension means (29) are interposed between said cylinder (11) and said support structure (1).

## Patentansprüche

1. Holzspaltgerät, aufweisend eine Stützstruktur (1), getragen durch die Stützstruktur (1) ein lineares Stellglied (10), eine Spaltklinge (8) auslösend, die relativ zu einer Gegenfläche (5) verschiebbar zwischen einer eingefahrenen Stellung und einer vorgerückten Stellung ist, um ein Holzstück zu spalten, ein Betätigungsmodul (12) des linearen Stellglieds (10), Steuereinrichtungen (16, 19) des Betätigungsmoduls (12), um die Spaltklinge (8) aus der eingefahrenen Stellung in die vorgerückte Stellung zu verschieben, und wobei umgekehrt die Steuereinrichtungen (16, 19) eine Sicherheitseinrichtung (19) einschließen, die den Einsatz von beiden Händen des Bedieners erfordert, um eine Spaltung eines Holzstücks durch die Spaltklinge (8) auszuführen, und ein beweglicher Teil (10), verschiebbar in Bezug auf die Stützstruktur (1) zwischen einer ersten Stellung, in der der Betätigungsmodul (12) durch die Steuereinrichtung (16) sogar unabhängig von der Betätigung der Sicherheitseinrichtung (19) betätigbar gemacht werden kann, und einer zweiten Stellung, entsprechend der Anwendung der Spaltklinge (8) auf einen Widerstand gegen die Verschiebung derselben in die vorgerückte Stellung, wobei der Betätigungsmodul (12) zeitweise unwirksam gemacht wird, um so das Verschieben der Spaltklinge (8) in die vorgerückte Stellung zu stoppen, und wobei der Betätigungsmodul (12) nach der Betätigung der Sicherheitseinrichtung (19) dann wieder wirksam gemacht werden kann, um so mit dem Verschieben der Spaltklinge in die vorgerückte Stellung fortzufahren, **dadurch gekennzeichnet dass** der bewegliche Teil aus dem linearen Stellglied (10) besteht, das axial verschiebbar an der Stützstruktur (1) angebracht ist.

2. Spaltgerät gemäß Anspruch 1, **dadurch gekennzeichnet dass** die Sicherheitseinrichtung (19) eine Hilfsvorrichtung (32, 35) aufweist, die durch den Bediener ausgewählt betätigt werden kann, folgend einer Anfangsbetätigung der Sicherheitseinrichtung (19), die den Betätigungsmodul (12) wieder aktiv macht, um so den Betätigungsmodul (12) andauernd aktiv zu halten, bis die Spaltklinge (8) die vorgerückte Stellung erreicht.

3. Spaltmaschine gemäß Anspruch 2, **dadurch gekennzeichnet dass**
- das lineare Stellglied ein hydraulischer Heber (10) ist, dessen Zylinder mit der Stützstruktur (1) verbunden ist, und dessen Kolben (9) die Spaltklinge (8) trägt;
- der Betätigungsmodul eine Ventileinheit (12) aufweist, die fest am Zylinder (11) des hydraulischen Hebers (10) befestigt ist, und ein Hauptventil (34) aufweist, das durch die Steuereinrichtüng (16, 19) zu betätigen ist, sowie ein Zweitventil (35), das betriebsbereit an das Hauptventil (34) angeschlossen ist, und konstruiert ist, durch die Hilfsvorrichtung (32) betätigt zu werden.

4. Spaltgerät gemäß Anspruch 3, **dadurch gekennzeichnet dass** das Zweitventil (35) durch die Hilfsvorrichtung (32) verschiebbar ist zwischen einer untätigen Stellung und einer tätigen Steuerstellung des Hauptventils (34).

5. Spaltgerät gemäß Anspruch 3, **dadurch gekennzeichnet dass** die Steuereinrichtung ein Pedal (16) aufweist, und die Sicherheitseinrichtung ein Paar voneinander beabstandeter Schwingarme (19) aufweist, wobei der wirksame Hub der Schwingarme (19) größer ist als der wirksame Hub des Pedals (16).

6. Spaltgerät gemäß Anspruch 5, **dadurch gekennzeichnet dass** die Hilfseinrichtung einen Schwinghebel (32) aufweist, der durch das Greifende von einem der Schwingarme (19) getragen wird.

7. Spaltgerät gemäß Anspruch 3, **dadurch gekennzeichnet dass** der hydraulische Heber (10) vertikal angeordnet ist, und dass der entsprechende Zylinder (11) zusammen mit der Ventileinheit (12) in Bezug auf die Stützstruktur (1) verschiebbar ist zwischen einer abgesenkten, der ersten Stellung entsprechenden Position und einer erhöhten, der zweiten Stellung entsprechenden Position.

8. Spaltgerät gemäß Anspruch 7, **dadurch gekennzeichnet dass** eine elastische Aufhängungseinrichtung (29) zwischen dem Zylinder (11) und der Stützstruktur (1) angeordnet ist.

## Revendications

1. Appareil pour débiter des bûches de bois ou des souches, comprenant une structure de support (1), un dispositif d'actionnement linéaire (10) porté par la structure de support (1) et actionnant une lame à débiter (8) susceptible de se déplacer entre une position rentrée et une position avancée par rapport à une surface de contraste (5) destinée à une bûche de bois à débiter, un système d'exploitation (12) du dispositif d'actionnement linéaire (10), des moyens de commande (16, 19) du système d'exploitation (12) permettant de déplacer la lame à débiter (8) de la position rentrée dans la position avancée, et vice versa, les moyens de commande (16, 19) comprenant des moyens de sécurité (19) nécessitant l'action des deux mains de l'opérateur pour que la lame à débiter (8) réalise l'opération de débit d'une bûche de bois, et un élément mobile (10) déplaçable, par rapport à la structure de support (1), entre une première position, dans laquelle le système d'exploitation (12) peut être activé par les moyens de commande (16), même indépendamment de l'actionnement des moyens de sécurité (19), et une deuxième position correspondant à l'application, à la lame à débiter (8), d'une résistance l'empêchant de se déplacer vers la position avancée, le système d'exploitation (12) étant rendu temporairement inopérant afin d'arrêter le déplacement de la lame à débiter (8) vers la position avancée, et le système d'exploitation (12) pouvant être rendu à nouveau opérant afin de poursuivre le déplacement de la lame à débiter en direction de la position avancée, lorsque les moyens de sécurité (19) sont actionnés, **caractérisé en ce que** l'élément mobile est constitué par le dispositif d'actionnement linéaire (10) qui est relié à la structure de support (1) avec possibilité de déplacement axial.

2. Appareil à débiter selon la revendication 1, **caractérisé en ce que** les moyens de sécurité (19) comprennent un dispositif auxiliaire (32, 35) qui peut être actionné de façon sélective par l'opérateur, suite à un actionnement initial des moyens de sécurité (19) réactivant le système d'exploitation (12), afin que le système d'exploitation (12) reste actif en permanence jusqu'à ce que la lame à débiter (8) atteigne la position avancée.

3. Appareil à débiter selon la revendication 2, **caractérisé en ce que** :
- le dispositif d'actionnement linéaire est un vérin hydraulique (10) dont le cylindre est relié à la structure de support (1) et dont la tige (9) porte la lame à débiter (8) ;
- le système d'exploitation comprend une soupape (12) montée fixement sur le cylindre (11) du vérin hydraulique (10) et comprenant une soupape principale (34) susceptible d'être actionnée par les moyens de commande (16, 19), et une soupape secondaire (35) associée de façon opératoire à la soupape principale (34) et conçue pour être actionnée par l'intermédiaire du dispositif auxiliaire (32).

4. Appareil à débiter selon la revendication 3, **caractérisé en ce que** la soupape secondaire (35) peut être amenée, par le dispositif auxiliaire (32), à passer d'une position inopérante à une position opérante de pilotage de la soupape principale (34).

5. Appareil à débiter selon la revendication 3, **caractérisé en ce que** les moyens de commande comprennent une pédale (16) et les moyens de sécurité comprennent une paire de bras oscillants (19) espacés l'un de l'autre, la course opératoire des bras oscillants (19) étant plus importante que la course opératoire de la pédale (16).

6. Appareil à débiter selon la revendication 5, **caractérisé en ce que** le dispositif auxiliaire comprend un levier oscillant (32) porté par l'extrémité par laquelle on saisit l'un des bras oscillants (19).

7. Appareil à débiter selon la revendication 3, **caractérisé en ce que** le vérin hydraulique (10) est monté verticalement et le cylindre associé (11) est susceptible de se déplacer, avec la soupape (12), par rapport à la structure de support (1), entre une position abaissée correspondant à la première position, et une position élevée correspondant à la deuxième position.

8. Appareil à débiter selon la revendication 7, **caractérisé en ce que** des moyens élastiques de suspension (29) sont montés entre le cylindre (11) et la structure de support (1).
